# EUROPEAN PATENT APPLICATION

(11) **EP 4 815 584 A1**
(43) Date of publication of application: **30.09.2026**
(21) Application number: 25738833.0
(22) Date of filing: 08.01.2025
(51) Int. Cl.: H04W 60/00, H04W 76/16, H04W 8/02, H04W 88/06

(54) **METHOD AND DEVICE FOR DUALSTEER TERMINAL TO REGISTER ON MULTIPLE NETWORKS**

(30) Priority: 08.01.2024 KR 20240002892
(71) Applicant: Samsung Electronics Co., Ltd., Suwon-si, Gyeonggi-do 16677 (KR)
(72) Inventor: KWEON, Kisuk, Suwon-si, Gyeonggi-do 16677 (KR)
(74) Representative: Gulde & Partner
(86) International application number: PCT/KR2025/000374
(87) International publication number: WO 2025/150866

(57) **Abstract**

The present disclosure relates to a 5G or 6G communication system for supporting higher data transmission rates. According to an embodiment of the present disclosure, a terminal can perform improved transmission and reception of user data by registering on a plurality of provider networks in order to use the plurality of wireless provider networks.

## Description

### [Technical Field]

The disclosure relates to a wireless communication system and, more particularly, to a method and a device for registering in multiple operator networks in order to use multiple operator radio networks for improved user data transmission.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

According to an embodiment of the disclosure, there has emerged a need for an apparatus and a method capable of effectively providing services in a wireless communication system.

### [Disclosure]

### [Technical Problem]

An aspect of the disclosure is to provide a method and a device for providing a multiple access connectivity service to a user by using a radio network operated by multiple mobile communication operators in a wireless communication system.

### [Technical Solution]

A method performed by an access and mobility management function (AMF) entity associated with a visited public land mobile network (VPLMN) in a wireless communication system according to an embodiment of the disclosure may include: receiving, from a base station which received a registration request message from a UE, a first message requesting registration of the UE regarding a VPLMN network; transmitting a second message including registration type information and home PLMN (HPLMN) information to a unified data management (UDM) entity to register the UE, the registration type information indicating initial registration regarding a dual steer, and the HPLMN information including at least one of an HPLMN identifier or a UE identifier of the HPLMN; receiving a third message including subscription information of the UE from the UDM; and generating UE context information associated with a VPLMN regarding the dual steer, based on the received subscriber information of the UE.

Meanwhile, an access and mobility management function (AMF) entity associated with a visited public land mobile network (VPLMN) in a wireless communication system according to an embodiment of the disclosure may include a transceiver and a controller configured to perform control to receive, from a base station which received a registration request message from a UE, a first message requesting registration of the UE regarding a VPLMN network, through the transceiver; transmit a second message including registration type information and home PLMN (HPLMN) information to a unified data management (UDM) entity to register the UE, the registration type information indicating initial registration regarding a dual steer, and the HPLMN information including at least one of an HPLMN identifier or a UE identifier of the HPLMN; receive a third message including subscription information of the UE from the UDM; and generate UE context information associated with a VPLMN regarding the dual steer, based on the received subscriber information of the UE.

### [Advantageous Effects]

Provided according to an embodiment of the disclosure are an apparatus and a method capable of effectively providing services in a wireless communication system.

### [Description of Drawings]

FIG. 1 is a diagram illustrating an architecture of a 5G network according to an embodiment of the disclosure.
FIG. 2 is a diagram illustrating the structure of a 5G network for supporting an access traffic steering, switching, and splitting (ATSSS) service according to an embodiment of the disclosure.
FIG. 3 is a diagram illustrating a UE structure including functions for using an ATSSS service according to an embodiment of the disclosure.
FIG. 4 is a diagram illustrating a scheme of providing a network access service to a user using two different mobile communication operator access networks according to an embodiment of the disclosure.
FIG. 5 is a diagram illustrating a scheme in which a DualSteer UE registers in two mobile communication networks and uses a multi-access connectivity service according to an embodiment of the disclosure.
FIG. 6A is a diagram illustrating a procedure in which a DualSteer UE requests a MA PDU session over multiple PLMNs to be configured in an HPLMN according to an embodiment of the disclosure.
FIG. 6B is a diagram illustrating a procedure in which a DualSteer UE requests a MA PDU session over multiple PLMNs to be configured in an HPLMN according to an embodiment of the disclosure.
FIG. 6C is a diagram illustrating a procedure in which a DualSteer UE requests a MA PDU session over multiple PLMNs to be configured in an HPLMN according to an embodiment of the disclosure.
FIG. 7A is a diagram illustrating a VPLMN network registration procedure of a UE according to an embodiment of the disclosure.
FIG. 7B is a diagram illustrating a VPLMN network registration procedure of a UE according to an embodiment of the disclosure.
FIG. 7C is a diagram illustrating a VPLMN network registration procedure of a UE according to an embodiment of the disclosure.
FIG. 8A is a diagram illustrating a procedure in which a UE requests a MA PDU session over multiple PLMNs in a VPLMN according to an embodiment of the disclosure.
FIG. 8B is a diagram illustrating a procedure in which a UE requests a MA PDU session over multiple PLMNs in a VPLMN according to an embodiment of the disclosure.
FIG. 8C is a diagram illustrating a procedure in which a UE requests a MA PDU session over multiple PLMNs in a VPLMN according to an embodiment of the disclosure.
FIG. 8D is a diagram illustrating a procedure in which a UE requests a MA PDU session over multiple PLMNs in a VPLMN according to an embodiment of the disclosure.
FIG. 9 is a diagram for proposing various schemes in which an AMF in a VPLMN selects an H-AMF and an H-SMF according to an embodiment of the disclosure.
FIG. 10 illustrates a structure of a UE according to an embodiment of the disclosure.
FIG. 11 illustrates a structure of a base station or network entity according to an embodiment of the disclosure.

### [Mode for Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. As used herein, a "downlink (DL)" refers to a radio link via which a base station transmits a signal to a terminal, and an "uplink (UL)" refers to a radio link via which a terminal transmits a signal to a base station. Furthermore, in the following description, LTE, LTE-A, or 5G systems may be described by way of example, but the embodiments of the disclosure may also be applied to other communication systems having similar technical backgrounds or channel types. Examples of such communication systems may include 5th generation mobile communication technologies (5G, new radio, or NR) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the IoT provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, for example, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

As used herein, each of such phrases as "A and/or B," "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing communication functions. Also, the embodiments of the disclosure as described below may also be applied to other communication systems having similar technical backgrounds or channel types to the embodiments of the disclosure. Furthermore, based on determinations by those skilled in the art, the embodiments of the disclosure may also be applied to other communication systems through some modifications without significantly departing from the scope of the disclosure.

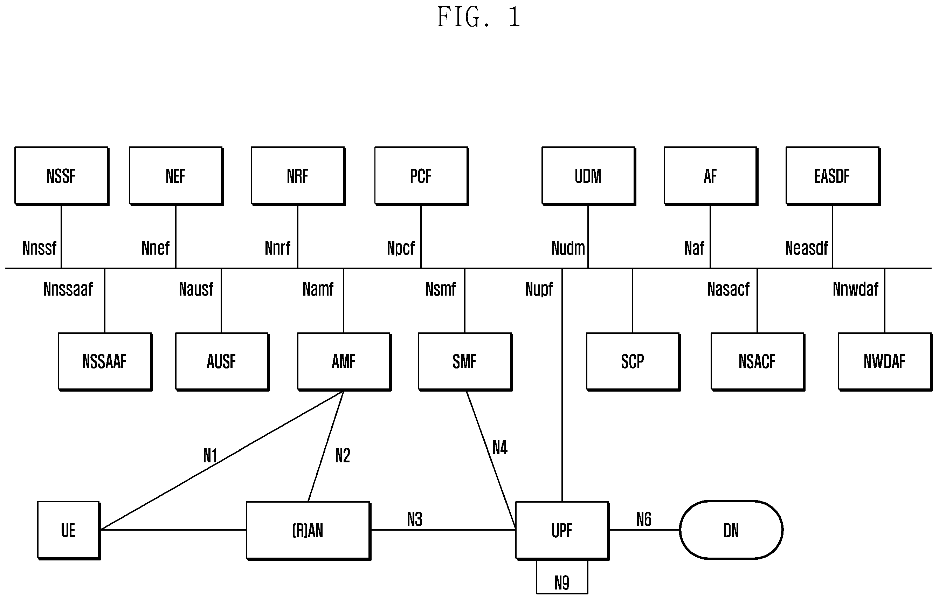

As used herein, a network technology may refer to a standard specification (e.g., TS 23.501, TS 23.502, TS 23.503, etc.) defined by the international telecommunication union (ITU) or 3GPP, and each element included in a network structure of FIG. 1 may indicate a physical entity, or software performing an individual function or hardware combined with the software. Reference numerals, denoted as Nx, such as N1, N2, N3, ..., in the drawings represent known interfaces between NFs in a 5G core network (CN), and a detailed description thereof will be omitted since the relevant description may refer to the standard specification (TS 23.501).

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of the terms and names defined in the 3rd generation partnership project long term evolution (3GPP LTE) specifications may be used for the sake of descriptive convenience. However, the disclosure is not limited by these terms and names, and may be applied in the same way to systems that conform other specifications.

FIG. 1 illustrates an example of an architecture of a wireless communication system according to an embodiment of the disclosure, and FIG. 1 illustrates an architecture of a 5G system by way of example.

Referring to FIG. 1, the 5G network may include network entities (NEs) or network functions (NFs) described below.

A (radio) access network ((R)AN) is an entity that performs radio resource allocation for a UE, and may be at least one of an eNode B, a Node B, a base station (BS), a next generation radio access network (NG-RAN), a 5G access network (5G-AN), a wireless access unit, a base station controller, or a node on the network.

A terminal may include a user equipment (UE), a next generation UE (NG UE), a mobile station (MS), a cellular phone, a smartphone, a computer, an Internet of things (IoT) device, or a multimedia system capable of performing a communication function.

Also, in the following description of embodiments of the disclosure, the 5G system will be described by way of example, but the embodiments of the disclosure may also be applied to other communication systems having similar technical backgrounds. Furthermore, based on determinations by those skilled in the art, the embodiments of the disclosure may also be applied to other communication systems through some modifications without significantly departing from the scope of the disclosure.

As wireless communication systems evolve from the 4G system to the 5G system, a next generation core (NG core) or a 5G core network (5GC) is defined as a new core network (CN). The new core network may fully virtualize existing network entities (NEs) into network functions (NFs). According to an embodiment of the disclosure, a network function may refer to a network entity, a network component, and a network resource.

According to an embodiment of the disclosure, the 5GC may include the NFs illustrated in FIG. 1. Of course, the disclosure is not limited by the example in FIG. 1, and the 5GC may include a larger or smaller number of NFs than the NFs illustrated in FIG. 1.

An access and mobility management function (AMF) may be a network function that manages access and mobility of a UE. For example, the AMF may perform network functions, such as registration, connection, reachability, and mobility management of a UE, access verification, authentication, and mobility event generation.

A session management function (SMF) may be a network function that manages packet data network (PDN) connection provided to a user equipment (UE). The PDN connection may be called a protocol data unit (PDU) session. For example, the SMF may perform network functions, such as a session management function through session establishment, modification, and release, and tunnel maintenance between a user plane function (UPF) and the RAN required therefor, user plane (UP) selection and control, traffic processing control at the UPF, and charging data collection control.

A policy control function (PCF) may be a network function that applies a service policy, a charging policy, and a PDU session policy of a mobile communication service provider to a UE.

A unified data management (UDM) may be a network function that stores information about a subscriber. For example, the UDM may perform functions, such as generation of authentication information for 3GPP security, processing of a user identifier (user ID), management of a list of network functions supporting a UE, and management of subscription information.

A network exposure function (NEF) may be a function that provides information about a UE to a server located outside the 5G network. In addition, the NEF may provide a function of providing information required for a service to the 5G network and storing same in a unified data repository (UDR).

A user plane function (UPF) may be a function that serves as a gateway for delivering user data (PDU) to a data network (DN). More specifically, the UPF may serve to process data so as to deliver data transmitted by a UE to an external network or deliver incoming data from an external network to a UE. As an example, the UPF may perform network functions, such as serving as an anchor between radio access technologies (RAT), packet routing and forwarding, packet inspection, user plane policy application, traffic usage report creation, and buffering.

A network repository function (NRF) may store profiles of NFs and perform an NF discovery function.

An authentication server function (AUSF) may perform UE authentication in a 3GPP access network and a non-3GPP access network.

A network slice selection function (NSSF) may perform selection of a network slice instance provided to a UE.

A network data analytics function (NWDAF) may collect data from various NFs for the purpose of efficient operation of the 5GC network. The collected data may be analyzed using a machine learning (ML) model, and the analysis result may be provided back to the NFs so as to help each NF to provide an efficient network service.

An application function (AF) may communicate with a service provider network to allow an external server (application server) to use a network service provided by the service provider network. The AF may be classified into an internal AF and an external AF according to deployment entities. An internal AF deployed by a network operator may communicate directly with NFs within the operator's network. An AF deployed by a service provider (3rd party service provider) may need to pass through the NEF in order to communicate with NFs within the operator's network.

A data network (DN) may be a data network over which a UE transmits or receives data to use a service of a network operator or a 3rd party service.

According to an embodiment of the disclosure, the UE may include an IoT device. The IoT device may include a device that uses no battery power or operates with very low power, and such an IoT device will be referred to as an ambient IoT device (or simply "ambient IoT").

According to an embodiment of the disclosure, in order to provide an improved multi-access connectivity service to a user, a mobile communication operator may transmit user data by using two or more radio accesses. In particular, the mobile communication operator may use not only the operator's radio access, but also radio accesses of other mobile communication operators, in order to provide an improved data transmission service using multiple radio accesses. The disclosure proposes a method and a device for providing a multi-access connectivity service to a user by using multiple operator networks.

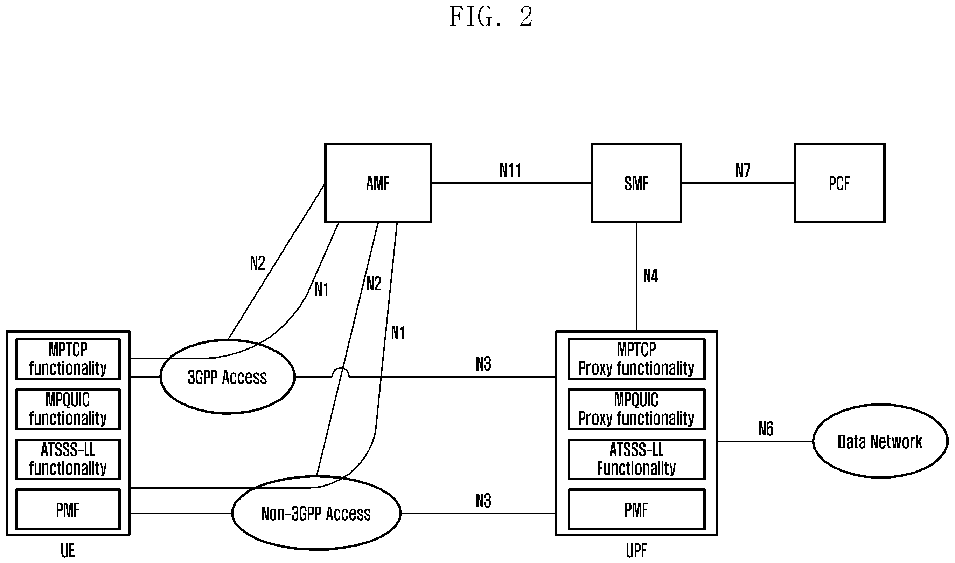

FIG. 2 illustrates the structure of a 5G network for supporting an access traffic steering, switching, and splitting (ATSSS) service according to an embodiment of the disclosure.

According to an embodiment of the disclosure, a UE may transmit user data to a network by using two or more radio access networks ((R)ANs). The (R)AN used by the UE may be divided into an access type and a radio access technology (RAT) type. The access type is divided into 3GPP access and non-3GPP access. The non-3GPP access may include all radio access networks other than the 3GPP access. For example, a wireless local access network (WLAN) is a typical non-3GPP access. In addition, the 3GPP access may be divided into multiple types of RATs. According to an embodiment, the 3GPP access may include 5G NR, evolved UTRA (E-UTRA), and universal terrestrial radio access (UTRA), and various other 3GPP radio access networks may be included.

FIG. 2 illustrates an architecture reference model for access traffic steering, switching, and splitting (ATSSS) technology defined in 3GPP Release 18 standards according to an embodiment.

A network may provide a multi-access connectivity service to a UE by using two radio access networks (3GPP access and non-3GPP access). To this end, the UE may generate a multi-access PDU session (MA PDU session) including two independent N3/N9 tunnels. By using the MA PDU session, the UE may perform traffic steering (a scheme in which service data flow data is transmitted by selecting one of two radio access networks), traffic switching (a scheme in which service data flow data that is currently transmitted by using one radio access network is transmitted after a change to another radio access network), and traffic splitting (a scheme in which data of one service data flow is divided into two, which are then transmitted by using two radio access networks simultaneously) operations, based on ATSSS rules.

In order for a UE and a UPF to perform steering, switching, or splitting operations regarding service data flow data by using an MA PDU session, the UE must include at least one of multipath transmission control protocol (MPTCP) functionality, multipath quick user datagram protocol (UDP) Internet connections (QUIC) (MPQUIC) functionality, or ATSSS low-layer (ATSSS-LL) functionality. In addition, the UPF may include at least one of MPTCP proxy functionality, MPQUIC proxy functionality, or ATSSS-LL functionality.

According to the above-mentioned functionalities, data of one service data flow may be bifurcated and simultaneously transmitted through two tunnels (e.g., data of two paths), and the data flows simultaneously transmitted using two paths are merged into one data flow. By transmitting data using two paths, the UE may expect improved data throughput.

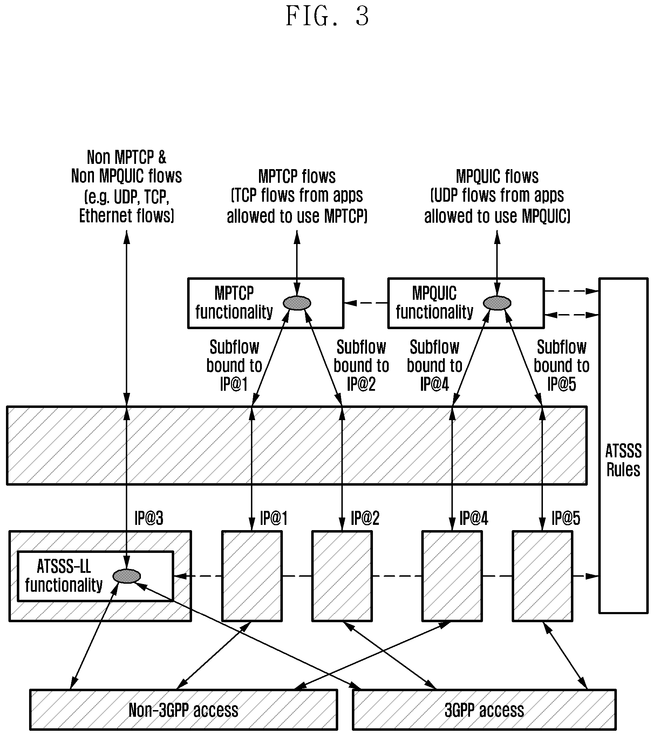

FIG. 3 illustrates the structure of a UE including functionalities for using an ATSSS service according to an embodiment of the disclosure.

In order to use the ATSSS service, the UE may include at least one of the following functionalities:
- Multipath TCP (MPTCP) functionality
- Multipath QUIC (MPQUIC functionality
- ATSSS low-layer (ATSSS-LL) functionality.

The UE may use the MPTCP functionality with regard to a service data flow using a transmission control protocol (TCP), and may use the MPQUIC functionality with regard to a service data flow using a user datagram protocol (UDP). In addition, the UE may use the ATSSS-LL function with regard to all service data flows using the TCP protocol, the UDP protocol, or the Ethernet protocol.

In order to provide a multi-access connectivity service to the UE, respective functionalities may support operations of bifurcating one service data flow into two sub-flows and simultaneously transmitting the same to the network using two radio access networks (non-3GPP access and 3GPP access). An individual IP address may be allocated to each sub-flow of the MPTCP functionality and the MPQUIC functionality. In the case of the ATSSS-LL functionality, data may be transmitted to two radio access networks using one IP address.

The functionality provided by the ATSSS service with regard to each service data flow may be determined by ATSSS rules. The functionalities provided by the ATSSS service are as follows: traffic steering (a scheme in which service data flow data is transmitted by selecting one of two radio access networks), traffic switching (a scheme in which service data flow data that is currently transmitted by using one radio access network is transmitted after a change to another radio access network), and traffic splitting (a scheme in which data of one service data flow is divided into two, which are then transmitted by using two radio access networks simultaneously).

The disclosure proposes a scheme for extending the multi-access connectivity service (e.g., ATSSS service) which has previously been provided to the UE by using one 3GPP access network and one non-3GPP access network. As an example, the UE may be provided with the multi-access connectivity service by using two 3GPP access networks or using two non-3GPP access networks or using two different mobile communication operators.

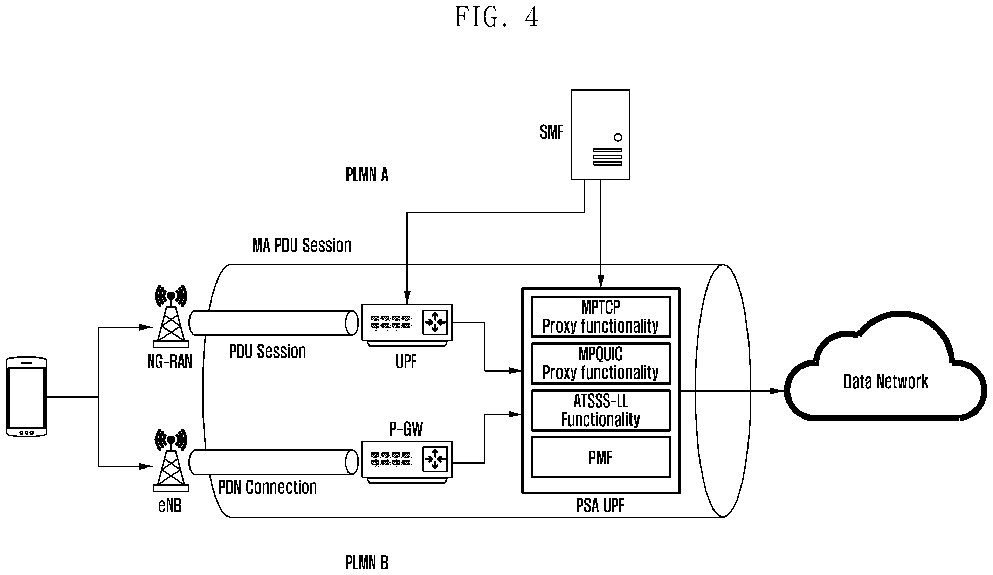

FIG. 4 is a diagram illustrating a scheme of providing a network access service to a user using two different mobile communication operator access networks according to an embodiment of the disclosure.

Referring to FIG. 4, a UE may use a network access service by using two different mobile communication operators' public land mobile network (PLMN) A and PLMN B. The UE may use the 3GPP access network, 5G NR network, and 4G EUTRA network provided by respective mobile communication operators. In order to transmit data of the UE's service data flow, the 5G network may configure a PDU session, and the 4G network may configure a PDN connection. Pieces of data transmitted by using each 3GPP access network may be transmitted to a PDU session anchor (PSA) UPF including an access traffic steering, switching, and splitting (ATSSS) functionality via a UPF and a packet data network (PDN) gateway (P-GW), respectively. The PSA UPF may reassemble data that has been bifurcated using MPTCP, MPQUIC, or ATSSS-LL functionality into one service data flow and transmit the same to the data network. Respective sessions in 5G and 4G may be included in one MA PDU session.

The extended ATSSS may provide an improved service to the UE by using two 3GPP access networks, compared with the legacy ATSSS which used one 3GPP access network and one non-3GPP access network. The service improvement by the extended ATSSS may be attributed to the fact that non-3GPP access networks mainly transmit data by using unlicensed bands and do not provide the quality of service (QoS) for transmission service improvement.

The disclosure proposes a scheme for configuring a session such that, among UEs which may user traffic steering and switching services by using two 3GPP access networks, a DualSteer UE registers in a mobile communication network and uses a multi-access connectivity service. The DualSteer UE is equipped with a multi-USIM and may register in two mobile communication networks and receive network services. According to an embodiment, simultaneous data transmission/reception from two networks are impossible, and two subscription permanent identifiers (SUPIs) may be used while sharing subscriber information of one mobile communication network.

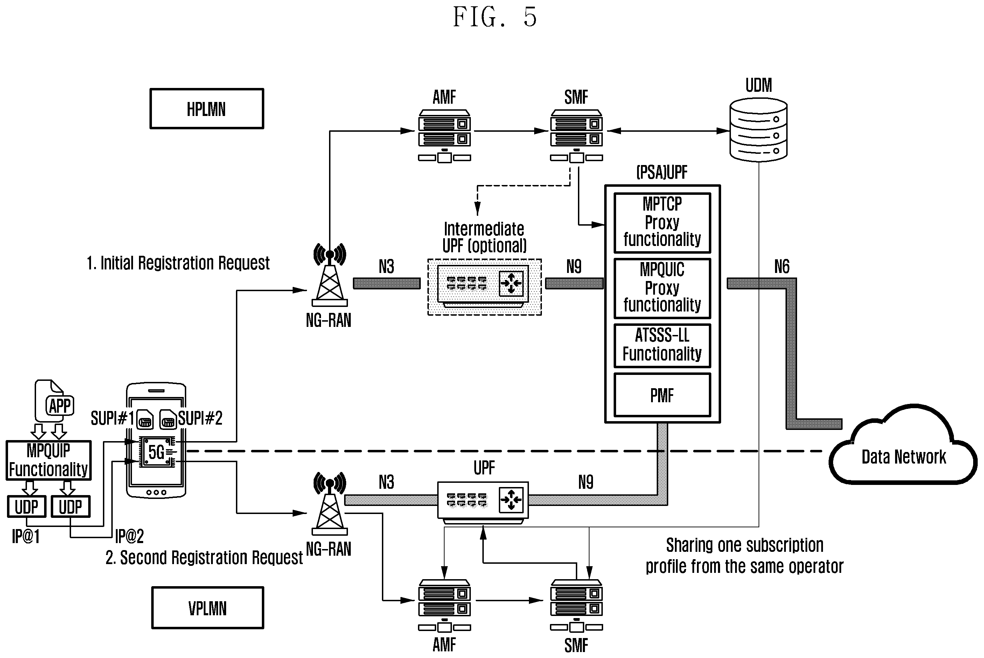

FIG. 5 is a diagram illustrating a scheme in which a DualSteer UE registers in two mobile communication networks and uses a multi-access connectivity service according to an embodiment of the disclosure.

The DualSteer UE may include two USIMs including an HPLMN network USIM and a VPLMN network USIM. According to an embodiment, the HPLMN UE ID may be SUPI#1, and the VPLMN UE ID may be SUPI#2. The UE may be registered in the HPLMN and use network services. The UE may register in the VPLMN in order to use the multi-access connectivity service. According to an embodiment, the VPLMN network may use the UE subscriber information of the HPLMN to provide the multi-access connectivity service to the UE.

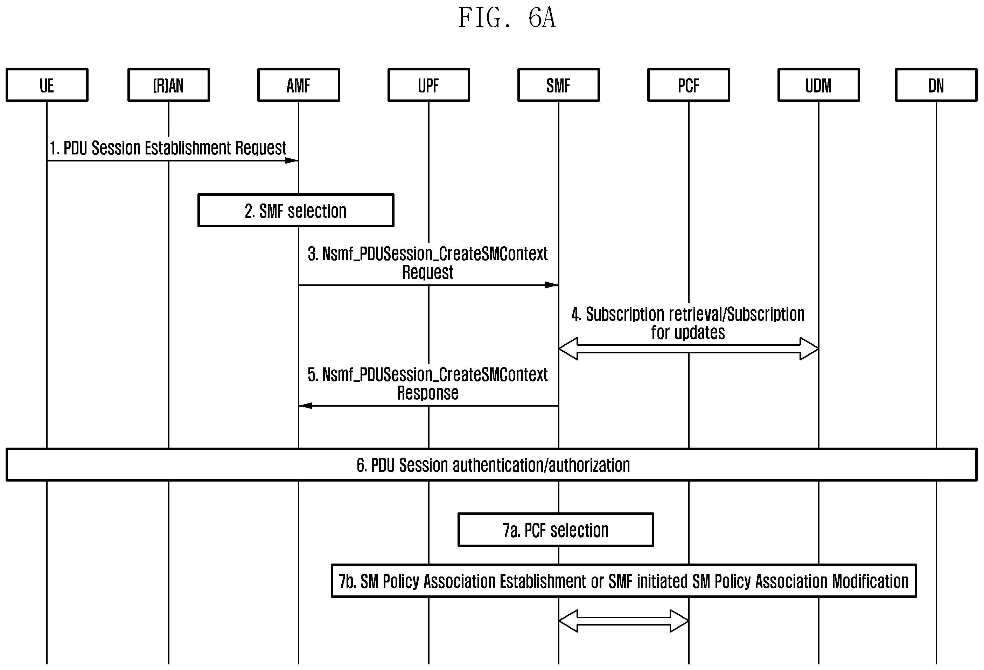

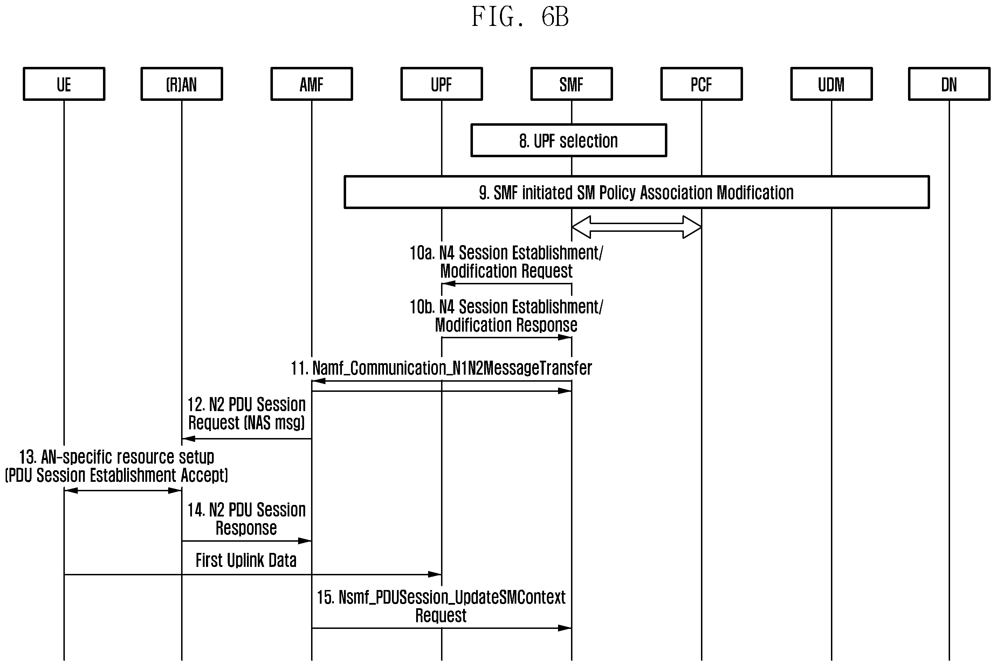

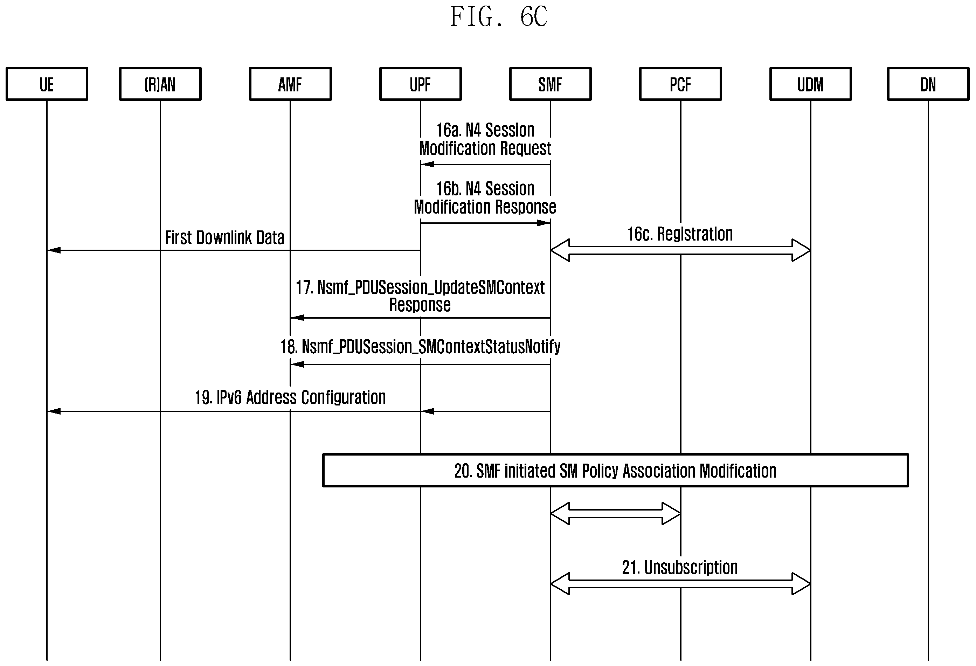

FIG. 6A to FIG. 6C are diagrams illustrating a procedure in which a DualSteer UE requests a MA PDU session over multiple PLMNs to be configured in an HPLMN according to an embodiment of the disclosure.

In step 1, the UE may transmit a PDU session establishment request message to the network in order to request an MA PDU session over multiple PLMNs to be configured. For example, the UE may transmit the PDU session establishment request message to the AMF entity of the network. The request type of the request message may be configured as "MA PDU Request_DualSteer_Multi-USIM", and may further include the following information:

### - VPLMN Information (VPLMN ID, GPSI of UE in VPLMN)

In step 2, if the AMF does not support the MA PDU Request_DualSteer_Multi-USIM function, the AMF may retransmit the UE's request to an AMF that supports the function. If the AMF which has received the request message supports the corresponding function, the AMF may determine whether to permit the UE's request, based on the UE's subscription information (e.g., access and mobility subscription data) received from the UDM. If the AMF permits the UE's request, the AMF may select an SMF supporting the MA PDU Request_DualSteer_Multi-USIM.

According to an embodiment of the disclosure, the AMF may generate a UE context for VPLMN to be used by the (V)AMF of the VPLMN, based on UE subscription information received from the UDM. Alternatively, the AMF may request the UDM to provide the UE context for VPLMN. In addition, the AMF may generate an AM policy and a UE policy for the VPLMN to be applied to the VPLMN by the UE, based on UE policy information and AM policy information of the HPLMN. Alternatively, the AMF may request the (H)PCF to provide the AM policy and UE policy for VPLMN.

In step 3, the AMF may transmit an Nsmf_PDUSession_CreateSMFContext request message to the selected SMF. The request message may include an "MA PDU Request_DualSteer_Multi-USIM" indication, and may also include whether the UE has registered in another PLMN.

In step 4, the SMF may retrieve subscriber information (e.g., session management subscription data) from the UDM, and determine whether the MA PDU session can be configured by using multiple 3GPP access networks, based on the subscriber information. The SMF may store the VPLMN ID and the UE GPSI of the VPLMN in the UDM. The SMF may generate an SM context for VPLMN to be used by the (V)SMF of the VPLMN, based on the UE subscription information received from the UDM. Alternatively, the SMF may request the UDM to provide the SM context for VPLMN.

In step 5, the SMF may transmit an Nsmf_PDUSession_CreateSMFContext response message to the AMF.

In step 6, a PDU session authentication/authorization procedure may be performed.

In step 7a, the SMF may select a PCF. In addition, in step 7b, SM policy association establishment or SMF-initiated SM policy association modification may be performed.

In steps 7a and 7b, the SMF may perform PCF selection, and in case that dynamic PCC is used, the SMF may transmit an "MA PDU Request_DualSteer_Multi-USIM" indication to the PCF. The PCF may provide the SMF with PCC rules including MA PDU session control information.

In step 8, the SMF may select one UPF or two UPFs including an intermediate UPF. According to an embodiment, in case that the SMF selects one UPF, the selected UPF may handle the MA PDU session. Alternatively, in case that the SMF selects two UPFs, the intermediate UPF may handle the PDU session, and the other UPF may handle the MA PDU session.

In step 9, an SMF-initiated SM policy association notification may be performed.

In step 10a, the SMF may transfer N4 rules for the MA PDU session over two 3GPP access networks to the UPF. In addition, in step 10b, the SMF may receive a response message from the UPF.

In step 11, the SMF may transmit an "MA PDU session accepted" indication to the AMF. The AMF may mark the PDU session as "MA PDU session over multiple PLMNs."

In step 12, the AMF may transmit an N2 PDU session request message to the (R)AN as a NAS message.

In step 13, the UE may receive a PDU Session Establishment Accept message. The message may include an "MA PDU session over two 3GPP access networks Accepted" indication. The message may include an ATSSS rule for a MA PDU session and may also include a serving SMF ID.

Steps 14 to 21 are procedures based on general technologies, and thus specific descriptions thereof are omitted.

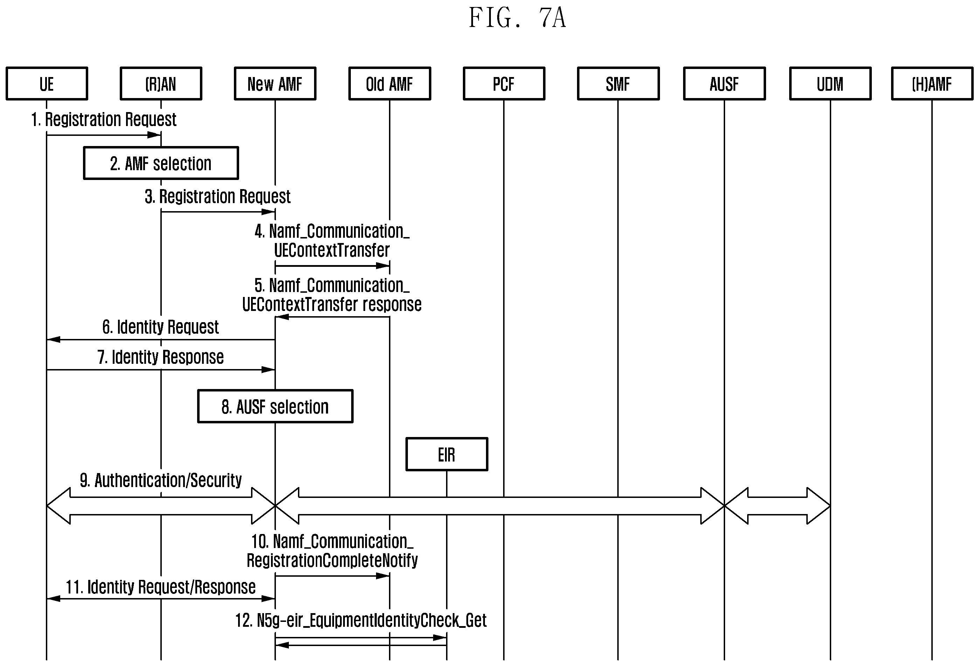

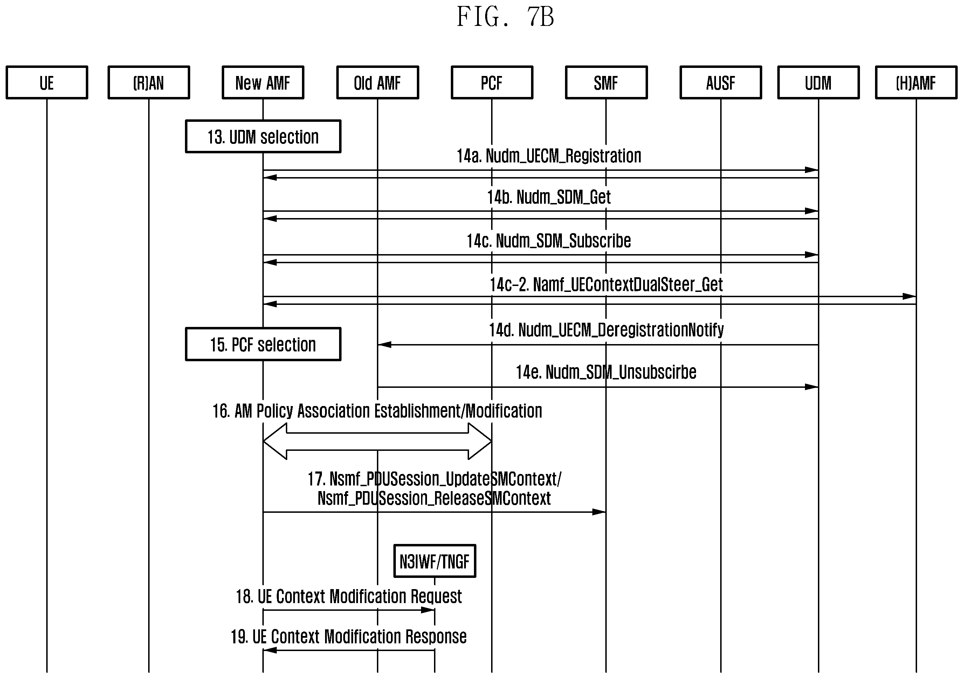

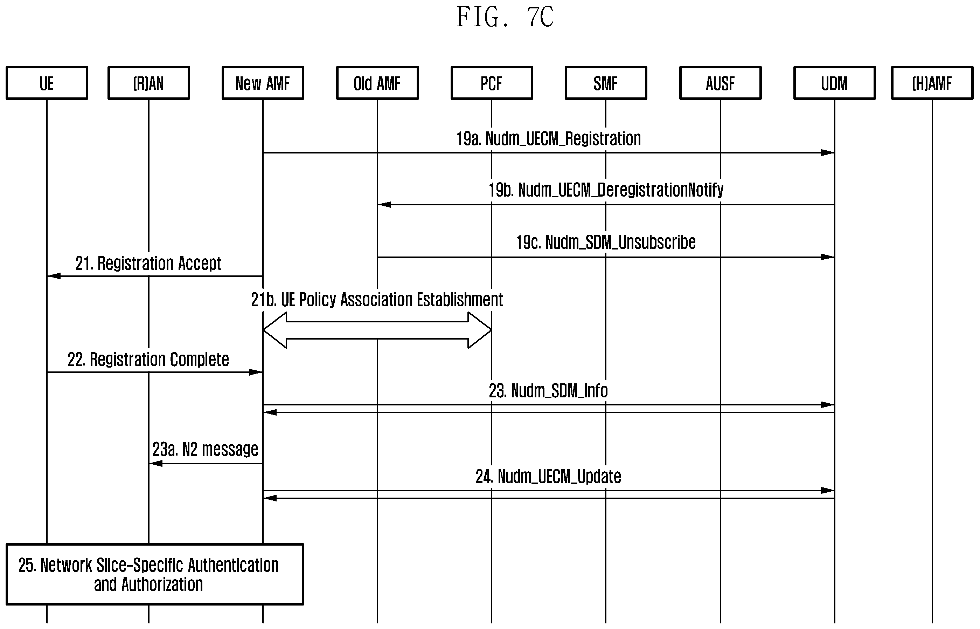

FIG. 7A to FIG. 7C are diagrams illustrating a VPLMN network registration procedure of a UE according to an embodiment of the disclosure.

In step 1, the UE may transmit a registration request message to the (R)AN (base station). The registration request message may include at least one of the following parameters: AN message (AN parameters, Registration Request (Registration type, SUCI or 5G-GUTI or PEI, [last visited TAI (if available)], Security parameters, [Requested NSSAI], [Mapping Of Requested NSSAI], [Default Configured NSSAI Indication], [UE Radio Capability Update], [UE MM Core Network Capability], [PDU Session status], [List Of PDU Sessions To Be Activated], [Follow-on request], [MICO mode preference], [Requested Active Time], [Requested DRX parameters for E-UTRA and NR], [Requested DRX parameters for NB-IoT], [extended idle mode DRX parameters], [LADN DNN(s) or Indicator Of Requesting LADN Information], [NAS message container], [Support for restriction of use of Enhanced Coverage], [Preferred Network Behaviour], [UE paging probability information], [Paging Subgrouping Support Indication], [UE Policy Container (list of PSIs, indication of UE support for ANDSP, operating system identifier, Indication of URSP Provisioning Support in EPS, UE capability of reporting URSP rule enforcement to network, UE capability of supporting VPLMN-specific URSP rules)] and [UE Radio Capability ID], [Release Request indication], [Paging Restriction Information], PEI, [PLMN with Disaster Condition], [Requested Periodic Update time], [Unavailability Period Duration], [Start of Unavailability Period], [Unavailability Type])).

In case that the (R)AN is an NG-RAN, the access network (AN) parameters may include at least one of the following values: 5G-S-TMSI or GUAMI, selected PLMN ID (or PLMN ID and NID), and NSSAI information, establishment cause.

The 5G S-temporary mobile subscription identifier (5G-S-TMSI) is a type of UE ID, and is a shortened form of a 5G globally unique temporary identifier (5G-GUTI). The 5G-S-TMSI includes an AMF set ID, an AMF pointer, and a 5G-TMSI, and is used in a radio signaling procedure.

The globally unique AMF identifier (GUAMI) is one type of AMF ID and may identify one AMF or more than one AMFs. The GUAMI includes an MCC, an MNC, an AMF region ID, an AMF set ID, and an AMF pointer.

The public land mobile network (PLMN) ID is the mobile communication operator's ID. The PLMN ID includes a mobile country code (MCC) and a mobile network code (MNC).

The network identifier (NID) is an ID used to identify a stand-alone non-public network (SNPN). The PLMN ID and NID are used together to identify the SNPN.

Values included in the network slice selection assistance information (NSSAI) are determined by the access stratum connection establishment NSSAI inclusion mode parameter provided by the AMF.

The establishment cause value indicates the purpose for which the UE has requested radio resource control (RRC) connection generation. According to an embodiment of the disclosure, the establishment cause may be configured to have the value of "Initial Registration_DualSteer".

If the UE is an integrated access and backhaul (IAB)-node which accesses 5GS, the AN parameter must include an IAB-indication.

If the UE is a part of a mobile base station relay (MBSR) node, the AN parameter must include an MBSR indication.

The registration type value indicates the purpose for which the UE requests registration. The registration type value may be configured as one of the following values: Initial Registration, Mobility Registration Update, Periodic Registration Update, Emergency Registration, Disaster Roaming Initial Registration, or Disaster Roaming Mobility Registration Update. According to an embodiment of the disclosure, the registration type may be configured to have the value of "Initial Registration_DualSteer".

The subscription concealed identifier (SUCI) is a type of UE ID and includes a subscription permanent identifier (SUPI) value concealed for the purpose of preventing the SUPI value from being exposed.

The 5G globally unique temporary identifier (5G-GUTI) is a type of UE ID, which is allocated to the UE by the AMF. The 5G-GUTI includes a GUAMI and a 5G-TMSI.

The permanent equipment identifier (PEI) is used to identify mobile equipment (ME). If the UE supports at least one 3GPP access technology (i.e., NG-RAN, E-UTRAN, UTRAN, or GERAN), the PEI type should be configured as an international mobile equipment identity (IMEI) or international mobile equipment identity-software version (IMEISV) type.

The last visited tracking area identity (TAI) indicates the TAI value visited by the UE for the last time. The last visited TAI value is referred to by the AMF to determine the registration area (RA) of the UE.

The security parameters value is used for the UE's authentication and integrity protection.

The requested NSSAI value includes a single network slice selection assistance information (S-NSSAI) value(s) corresponding to the network slice(s) that the UE wants to use.

The "mapping of requested NSSAI" value includes the value of the HPLMN S-NSSAI.

When the UE uses evolved UTRA (E-UTRA), the UE indicates whether the cellular IoT (CIoT) 5GS optimizations are supported. The UE's indication regarding the support has an influence on the AMF selection.

If the UE performs initial registration or disaster roaming registration, the UE needs to indicate the UE's identity in a registration request message as follows:
i. If the UE has a valid evolved packet system (EPS) GUTI, the 5G-GUTI mapped thereto
ii. If possible, the native 5G-GUTI allocated by the PLMN in which the UE attempts to register
iii. If possible, the native 5G-GUTI allocated by the equivalent PLMN of the PLMN in which the UE attempts to register
iv. If possible, the native 5G-GUTI allocated by another PLMN
v. If none of the above is possible, the UE must include its SUCI in the registration request message.

In the disclosure, the UE may include an HPLMN information (HPLMN ID and UE GPSI of HPLMN) value in a message. In addition, a follow-on request may be included to inform the network that the UE will immediately generate a PDU session after registration.

In step 2, the NG-RAN (base station) may identify the establishment cause value of "Initial Registration_DualSteer" in the AN parameter and may select an AMF that supports Initial Registration_DualSteer and MA PDU Request_DualSteer_Multi_USIM.

In step 3, the NG-RAN may transmit a registration request message to the selected AMF.

In step 4, the selected AMF may transmit a Namf_Communication_UEcontextTransfer message to the old AMF. In step 5, the selected AMF may receive a Namf_Communication_UEcontextTransfer response message from the old AMF.

In step 6, the selected AMF may transmit an identity request message to the UE. In step 7, the selected AMF may receive an identity response message from the UE. In step 8, the selected AMF may select an AUSF.

In step 9, the AMF may perform mutual authentication by using the UE SUPI of the VPLMN.

In step 10, the AMF may transmit a Namf_Communication_RegistrationCompleteNotify message to the old AMF. In step 11, the AMF may perform transmission/reception of an identity request message and an identity response message with the UE.

In step 12, the AMF may perform N5g-eir_EquipmentIdentityCheck_Get to the equipment identity register (EIR).

In step 13, the AMF may perform UDM selection.

In step 14a, if the AMF has not registered the UE in the UDM, the AMF may transmit an Nudm_UECM_Registration message to the UDM to register the UE in the UDM. The registration type may be configured to have the value of "Initial Registration_DualSteer" and may include a HPLMN information (HPLMN ID and UE GPSI of HPLMN) value.

In step 14b, the AMF may retrieve subscription data (e.g., access and mobility subscription data) of the UE from the UDM. The AMF may generate (V)UE context for DualSteer information, based on the received subscriber information.

In step 14c, the AMF may transmit an Nudm_SDM_Subscribe message to the UDM.

In step 14c-2, the AMF may transmit a Namf_UEContextDualSteer_Get message to the (H)AMF. The AMF may receive (H)UE context for DualSteer information and (H)AM policy and (H)UE policy for DualSteer from the (H)AMF. The AMF may search for the (H)AMF of the UE by using the HPLMN information (HPLMN ID and the UE's GPSI of HPLMN) received from the UE and the (H)UDM or (H)NRF.

In step 14d, the old AMF may receive a Nudm_UECM_DeregistrationNotify message from the UDM. In step 14e, the old AMF may transmit an Nudm_SDM_Unsubscribe message to the UDM.

In step 15, the AMF may perform PCF selection.

In step 16, the AMF may perform an AM policy association establishment for DualSteer procedure with the PCF. For the establishment, the AMF may transmit a DualSteer indication to the PCF.

In step 17, the AMF may transmit an Nsmf_PDUSession_UpdateSMContext/Nsmf_PDUSession_ReleaseSMContext message to the SMF. In step 18, the AMF may transmit a UE Context Notification Request message to the N3IWF/TNGF. In step 19, the AMF may receive a UE context notification response message from the N3IWF/TNGF.

In step 19a, the AMF may transmit an Nudm_UECM_Registration message to the UDM. In step 19b, the UDM may transmit an Nudm_UECM_DeregistrationNotify message to the old AMF. In step 19c, the old AMF may transmit an Nudm_SDM_Unsubscribe message to the UDM.

In step 21, the AMF may transmit a registration accept message to the UE. The registration accept message may include an initial registration_DualSteer support indication. The indication value may include whether the DualSteer function is provided by the network to the UE.

In step 21b, the AMF may perform UE policy association establishment with the PCF. In step 22, the UE that has received the registration accept message may transmit a registration complete message to the AMF.

In step 23, the AMF may transmit/receive Nudm_SDM_info to/from the UDM. In step 23a, the AMF may transmit an N2 message to the (R)AN.

In step 24, the AMF may transmit an Nudm_UEDM_Update message to the UDM.

In step 25, network slice-specific authentication and authorization may be performed between the UE and the AMF.

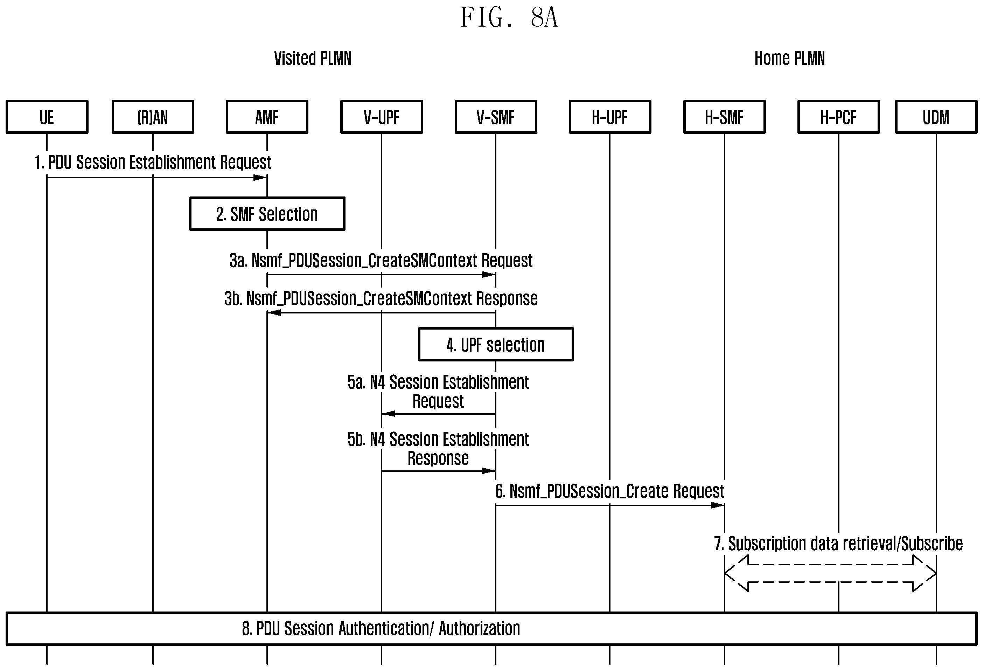

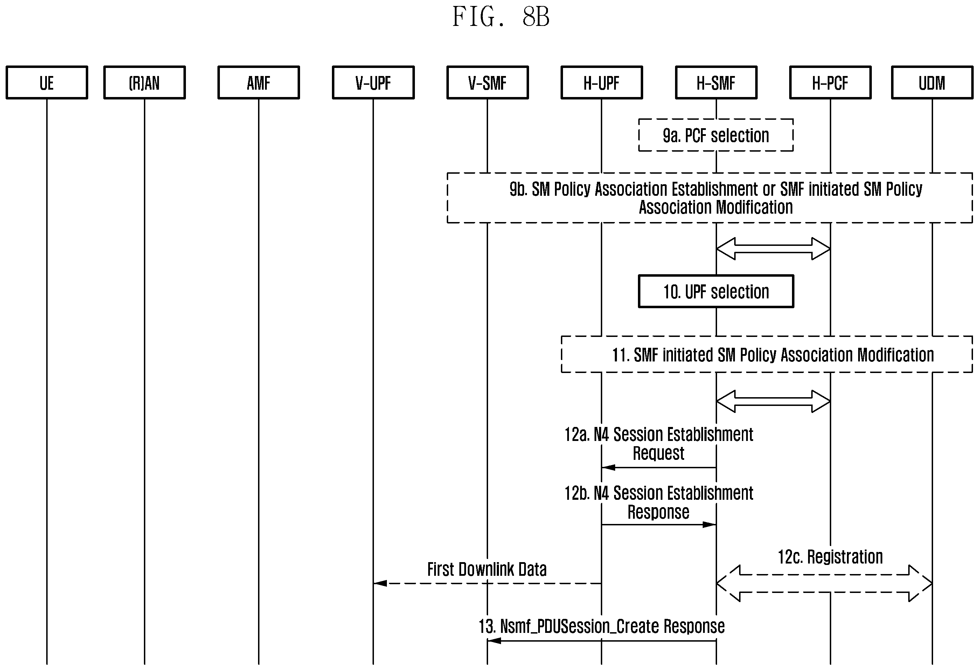

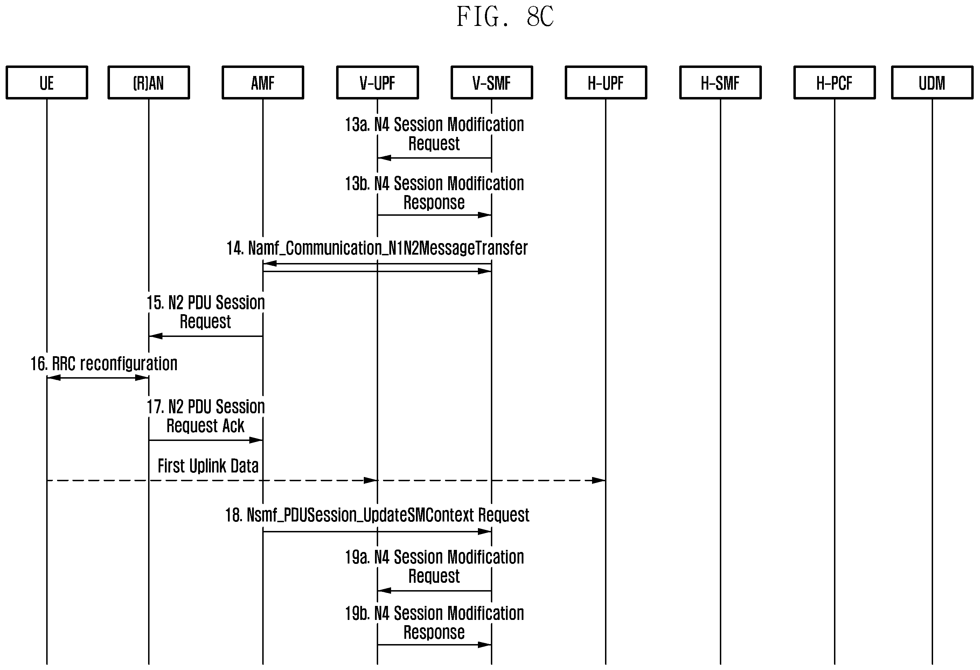

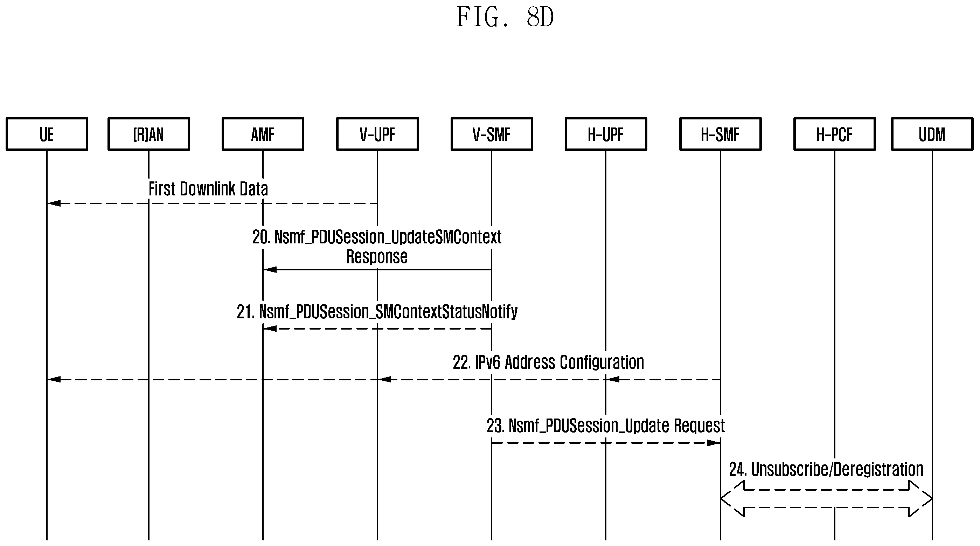

Meanwhile, FIGS. 8A to 8D are diagrams illustrating a procedure in which a UE requests a MA PDU session over multiple PLMNs in a VPLMN according to an embodiment of the disclosure.

In step 1, the UE may transmit a PDU session establishment request message to the VPLMN network. The request type may be configured as "MA PDU Request_DualSteer_Multi-USIM." In addition, the request message may further include HPLMN information (HPLMN ID and the UE GPSI of HPLMN). In addition thereto, the request message may further include an SMF ID, a PDU session ID of an MA PDU session configured by the HPLMN, and the like.

In step 2, in case that the AMF supports no MA PDU session over two 3GPP access networks, the AMF may retransmit the UE's request to an AMF which supports the same. According to an embodiment, the AMF may select a V-SMF that may support the MA PDU session over two 3GPP access networks. In addition, the AMF may select an H-SMF which handles the MA PDU session over two 3GPP access networks configured by the UE in the HPLMN. The AMF may search for an (H)SMF by using the HPLMN information (HPLMN ID and the UE GPSI of HPLMN) received from the UE and the (H)UDM or (H)NRF.

In step 3a, the AMF may transmit an Nsmf_PDUSession_CreateSMContextRequest message to the V-SMF. According to an embodiment, the AMF may provide the V-SMF with at least one of an "MA PDU Request_DualSteer_Multi-USIM" indication, an (H)SMF ID, an HPLMN ID, a UE GPSI of HPLMN, and an SMF ID of the H-SMF.

In step 3b, the AMF may receive an Nsmf_PDUSession_CreateSMContextRequest message from the V-SMF.

In step 4, the V-SMF may select an UPF in the VPLMN.

In steps 5a and 5b, the V-SMF may transmit an N4 session establishment request to the selected UPF, and may receive a response to the request.

In step 6, the V-SMF may transmit an Nsmf_PDUSession_CreateRequest message to the H-SMF. According to an embodiment, the V-SMF may transmit at least one of the following pieces of information to the H-SMF.

### - V-SMF SM context ID, V-SMF ID, V-CN tunnel info, AMF ID.

In step 7, the H-SMF may retrieve UE subscription information from the UDM. In addition, the H-SMF may store HPLMN information (HPLMN ID and UE GPSI of HPLMN) in the UDM.

In step 8, PUD session authentication/authorization may be performed.

In steps 9a and 9b, the H-SMF may perform PCF selection, and in case that dynamic PCC is used, the SMF may transmit an "MA PDU Request_DualSteer_Multi-USIM" indication to the PCF. The PCF may provide the SMF with PCC rules including MA PDU session control information.

In step 10, the H-SMF may select one UPF or two UPFs including an intermediate UPF. In case that the H-SMF selects one UPF, the selected UPF may handle the MA PDU session. Alternatively, in case that the H-SMF selects two UPFs, the intermediate UPF may handle the PDU session, and the other UPF may handle the MA PDU session.

In step 11, an SMF-initiated SM policy association notification may be performed. The SMF may be an H-SMF.

In step 12a, the H-SMF may transmit N4 rules for the MA PDU session over two 3GPP access networks to the H-UPF. In step 12b, the H-SMF may receive a response message from the H-UPF.

In step 12c, a registration procedure between the H-SMF and the UDM may be performed.

In addition, first downlink data may be transmitted from the H-UPF to the V-UPF.

In step 13, the H-SMF may transmit an Nsmf_PDUSession_Create Response message to the V-SMF.

According to an embodiment, in step 13, the H-SMF may transmit the following information to the V-SMF: QoS rule(s) for MA PDU Request_DualSteer_Multi-USIM, H-CN tunnel info, and ATSSS rule. In addition, SM context for VPLMN information may be included therein. Various other pieces of information may also be included.

In steps 13a-13b, the V-SMF may provide the UPF with N4 rules. For example, in step 13a, the V-SMF may transmit an N4 Session Modification Request message to the V-UPF. In step 13b, the V-UPF may transmit an N4 session modification response message to the V-SMF.

In step 14, the V-SMF may transmit an "MA PDU Session Accepted" indication to the AMF. The AMF may mark the PDU session as "MA PDU session over multiple PLMNs."

In step 15, the AMF may transmit an N2 PDU session request message to the (R)AN.

In step 16, the UE may perform an RRC reconfiguration with the (R)AN.

In step 17, the (R)AN may transmit an N2 PDU session request ack message to the AMF.

Thereafter, the UE may transmit first uplink data to the H-UPF via the V-UPF. Meanwhile, steps 18 to 24 are procedures based on general technologies, and detailed descriptions thereof will be omitted.

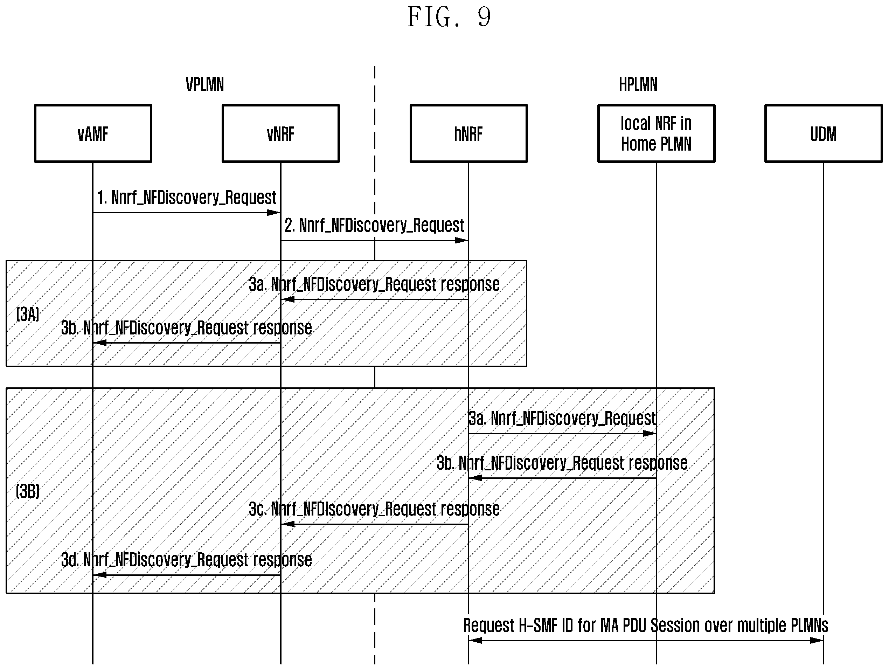

FIG. 9 is a diagram for proposing various schemes in which an AMF in a VPLMN selects an H-AMF and an H-SMF according to an embodiment of the disclosure.

A UE may receive an SMF ID through a PDU session establishment accept message in the HPLMN, as well as HPLMN information (HPLMN ID and UE GPSI of HPLMN). Therefore, there may be a method in which the received HPLMN information and/or the SMF ID are transferred from the VPLMN to the AMF such that the AMF selects the H-SMF (3A of FIG. 9).

In addition, there may be a method in which the AMF uses the V-NRF and the H-NRF to select the H-AMF and the H-SMF (3B of FIG. 9).

Specifically, in step 1, the vAMF may transmit an Nnrf_NFDiscovery_Request message to the vNRF. In step 2, the vNRF may transmit an Nnrf_NFDiscovery_Request message to the hNRF.

According to an embodiment of the disclosure, according to procedure 3A, in step 3a, the vNRF may receive an Nnrf_NFDiscovery_Request response message from the hNRF. In step 3b, the vNRF may transfer the Nnrf_NFDiscovery_Request response message to the vAMF.

According to another embodiment of the disclosure, according to procedure 3B, in step 3a, the hNRF may transmit an Nnrf_NFDiscovery_Request message to the local NRF of the HPLMN. In step 3b, the local NRF of the HPLMN may transmit an Nnrf_NFDiscovery_Request response message to the hNRF. Based on the received Nnrf_NFDiscovery_Request response message, the hNRF may transmit the Nnrf_NFDiscovery_Request response message to the vNRF, and the subsequent operations may be the same as those in procedure 3A.

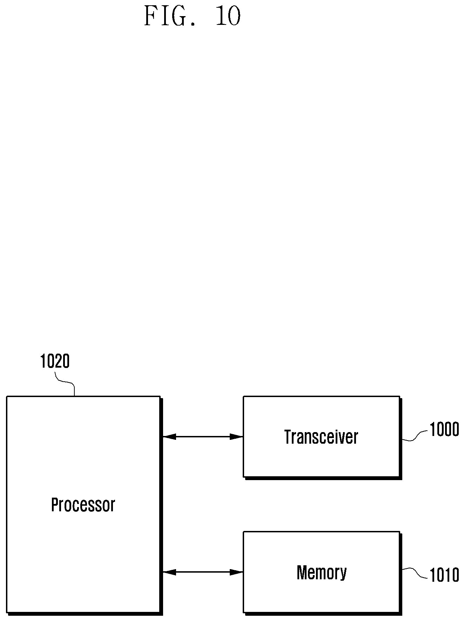

FIG. 10 illustrates a structure of a UE according to an embodiment of the disclosure.

The UE according to an embodiment of the disclosure may include a processor 1020 which controls the overall operation of the UE, a transceiver 1000 which includes a transmitter and a receiver, and a memory 1010. Of course, the example given above is not limiting, and the UE may include a smaller or larger number of components than the components illustrated in FIG. 10.

According to an embodiment of the disclosure, the transceiver 1000 may transmit/receive signals with network entities or other UEs. The signals transmitted/received with network entities may include control information and data. In addition, the transceiver 1000 may receive signals through a radio channel, output the same to the processor 1020, and transmit signals output from the processor 1020 through the radio channel.

According to an embodiment of the disclosure, the processor 1020 may control the UE to perform operations according to any one of the above-described embodiments. The processor 1020, the memory 1010, and the transceiver 1000 are not necessarily implemented as separate modules, but may be implemented as a single component unit such as a single chip. Also, the processor 1020 and the transceiver 1000 may be electrically connected to each other. In addition, the processor 1020 may be an application processor (AP), a communication processor (CP), a circuit, an application -specific circuit, or at least one processor.

According to an embodiment of the disclosure, the memory 1010 may store basic programs, application programs, and data, such as configuration information, for the operation of the UE. In particular, the memory 1010 provides the stored data at the request of the processor 1020. The memory 1010 may include storage media such as a ROM, a RAM, a hard disk, a CD-ROM, and a DVD, or a combination of storage media. In addition, the memory 1010 may include multiple memories. Furthermore, the processor 1020 may perform the above-described embodiments of the disclosure, based on the programs for performing the embodiments, stored in the memory 1010.

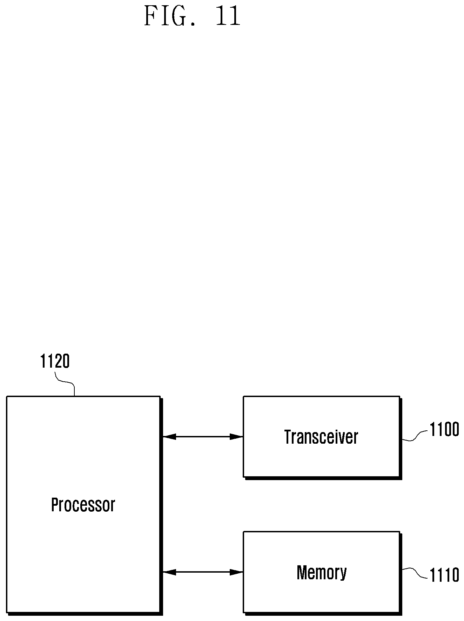

FIG. 11 illustrates a structure of a base station or network entity according to an embodiment of the disclosure.

The network entity according to an embodiment of the disclosure may include a processor 1120 which controls the overall operation of the network entity, a transceiver 1100 which includes a transmitter and a receiver, and memory 1110. Of course, the example given above is not limiting, and the network entity may include a smaller or larger number of components than the components illustrated in FIG. 11.

According to an embodiment of the disclosure, the transceiver 1100 may transmit/receive signals with at least one of other network entities or UEs. The signals transmitted/received with at least one of other network entities or UEs may include control information and data.

According to an embodiment of the disclosure, the processor 1120 may control the base station to perform operations according to any one of the above-described embodiments. Of course, the processor 1120, the memory 1110, and the transceiver 1100 are not necessarily implemented as separate modules, but may be implemented as a single component unit such as a single chip. Also, the processor 1120 and the transceiver 1100 may be electrically connected to each other. In addition, the processor 1120 may be an application processor (AP), a communication processor (CP), a circuit, an application-specific circuit, or at least one processor.

According to an embodiment of the disclosure, the memory 1110 may store basic programs, application programs, and data, such as configuration information, for the operation of the network entity. In particular, the memory 1110 provides the stored data at the request of the processor 1120. The memory 1110 may include storage media such as a ROM, a RAM, a hard disk, a CD-ROM, and a DVD, or a combination of storage media. In addition, the memory 1110 may include multiple memories. Furthermore, the processor 1120 may perform the above-described embodiments of the disclosure, based on the programs for performing the embodiments, stored in the memory 1110.

It should be noted that the above-described configuration diagrams, illustrative diagrams of control/data signal transmission methods, illustrative diagrams of operation procedures, and structural diagrams are not intended to limit the scope of the disclosure. That is, all the constituent elements, entities, or operation steps described in the embodiments of the disclosure should not be construed as being essential elements for the implementation of the disclosure, and even though including only some of the elements, the disclosure may be implemented without impairing the true of the disclosure. Also, the above respective embodiments may be employed in combination, as necessary. For example, the methods proposed in the disclosure may be partially combined with each other to operate a network entity and a UE.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of a network entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

In addition, the programs may be stored in an attachable storage device which is accessible to the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. In addition, the above respective embodiments may be employed in combination, as necessary. For example, the methods proposed in the disclosure may be partially combined with each other to operate a network entity and a terminal. Moreover, although the above embodiments have been described based on 5G and NR systems, other variants based on the technical idea of the embodiments may also be implemented in other communication systems such as LTE, LTE-A, and LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by an access and mobility management function (AMF) entity associated with a visited public land mobile network (VPLMN) in a wireless communication system, the method comprising:
receiving, from a base station which received a registration request message from a UE, a first message requesting registration of the UE regarding a VPLMN network;
transmitting a second message including registration type information and home PLMN (HPLMN) information to a unified data management (UDM) entity to register the UE, the registration type information indicating initial registration regarding a dual steer, and the HPLMN information including at least one of an HPLMN identifier or a UE identifier of the HPLMN;
receiving a third message including subscription information of the UE from the UDM; and
generating UE context information associated with a VPLMN regarding the dual steer, based on the received subscriber information of the UE.

2. The method of claim 1, further comprising:
identifying an AMF entity associated with the HPLMN, based on the HPLMN information; and
transmitting, to the identified AMF entity associated with the HPLMN, a fourth message requesting UE context information associated with an HPLMN regarding the dual steer.

3. The method of claim 2, further comprising receiving, from an AMF entity associated with the HPLMN, a fifth message including UE context information associated with an HPLMN regarding the dual steer.

4. The method of claim 3, wherein the fifth message further includes at least one of AM policy information regarding the HPLMN or UE policy information regarding the dual steer associated with the HPLMN.

5. The method of claim 1, further comprising:
selecting a policy control function (PCF) entity; and
performing AM policy association establishment regarding the dual steer with the selected PCF entity,
wherein a dual steer indicator is transmitted to the PCF entity for the establishment.

6. The method of claim 1, further comprising transmitting a sixth message for accepting registration to the UE,
wherein the sixth message includes information indicating whether the dual steer is supported.

7. The method of claim 1, wherein the AMF entity associated with a VPLMN supports initial registration regarding the dual steer, and supports a multi access (MA) protocol data unit (PDU) request regarding the dual steer associated with a multi universal subscriber identity module (multi USIM).

8. An access and mobility management function (AMF) entity associated with a visited public land mobile network (VPLMN) in a wireless communication system, the AMF entity associated with a VPLMN comprising:
a transceiver; and
a controller configured to perform control to:
receive, from a base station which received a registration request message from a UE, a first message requesting registration of the UE regarding a VPLMN network, through the transceiver;
transmit a second message including registration type information and home PLMN (HPLMN) information to a unified data management (UDM) entity to register the UE, the registration type information indicating initial registration regarding a dual steer, and the HPLMN information including at least one of an HPLMN identifier or a UE identifier of the HPLMN;
receive a third message including subscription information of the UE from the UDM; and
generate UE context information associated with a VPLMN regarding the dual steer, based on the received subscriber information of the UE.

9. The AMF entity associated with a VPLMN of claim 8, wherein the controller is configured to perform control to:
identify an AMF entity associated with the HPLMN, based on the HPLMN information; and
transmit a fourth message requesting UE context information associated with an HPLMN regarding the dual steer to the identified AMF entity associated with the HPLMN through the transceiver.

10. The AMF entity associated with a VPLMN of claim 9, wherein the controller is configured to perform control to receive, from an AMF entity associated with the HPLMN, a fifth message including UE context information associated with an HPLMN regarding the dual steer.

11. The AMF entity associated with a VPLMN of claim 10, wherein the fifth message further includes at least one of AM policy information regarding the HPLMN or UE policy information regarding the dual steer associated with the HPLMN.

12. The AMF entity associated with a VPLMN of claim 8, wherein the controller is configured to perform control to:
select a policy control function (PCF) entity; and
perform AM policy association establishment regarding the dual steer with the selected PCF entity, and
wherein a dual steer indicator is transmitted to the PCF entity for the establishment.

13. The AMF entity associated with a VPLMN of claim 8, wherein the controller is configured to perform control to transmit a sixth message for accepting registration to the UE through the transceiver, and
wherein the sixth message includes information indicating whether the dual steer is supported.

14. The AMF entity associated with a VPLMN of claim 8, wherein the AMF entity associated with the VPLMN supports initial registration regarding the dual steer, and supports a multi access (MA) protocol data unit (PDU) request regarding the dual steer associated with a multi universal subscriber identity module (multi USIM).
